# EUROPÄISCHE PATENTSCHRIFT

(11) **EP 1 712 405 B1**
(45) Veröffentlichungstag und Bekanntmachung des Hinweises auf die Patenterteilung: **25.06.2008**
(21) Anmeldenummer: 06112191.9
(22) Anmeldetag: 04.04.2006
(51) Int. Cl.: B60N 2/44

(54) **Sitz, insbesondere Fahrzeugsitz**
Seat, particularly vehicle seat
Siège, en particulier siège de véhicule

(30) Priorität: 13.04.2005 DE 102005016974
(43) Veröffentlichungstag der Anmeldung: 18.10.2006
(73) Patentinhaber: Ford Global Technologies, LLC, Dearborn, MI 48126 (US)
(72) Erfinder: Siebertz, Karl, 52457, Aldenhoven (DE); Lem, Jeroen, 6212 BE, Maastricht (NL); Bendt, Nicole, 52351, Düren (DE); Lindner, Hans-Joachim, 53881, Euskirchen (DE)
(74) Vertreter: Dörfler, Thomas

(56) Entgegenhaltungen:
- EP-A- 1 447 070
- DE-A1- 10 063 478
- US-A- 4 965 899
- US-B1- 6 203 105

## Beschreibung

Die Erfindung betrifft einen Sitz, insbesondere Fahrzeugsitz, nach dem Oberbegriff des Anspruchs 1.

Aus der US 4965899 ist ein solcher Fahrzeugsitz bekannt, bei dem zwischen einem Sitzrahmen und einem Sitzkissen mindestens ein Luftkissen und eine steife Stützplatte angeordnet sind. Indem das Luftkissen aufgeblasen wird, kann die Kontur des Sitzkissens an den Fahrer, z. B. an der Schenkelstütze, und/oder an die Fahrsituation, z. B. durch Aufweiten der Seitenpolster für einen besseren Seitenhalt, angepaßt werden. Dabei sorgt die Stützplatte dafür, daß die Konturänderung des Sitzkissens kontinuierlich erfolgt, d. h. Ausbeulungen im Sitzkissen im Bereich der Luftkissen werden so vermieden.

Sitze sollen die Ermüdung der Insassen, insbesondere des Fahrers, der eine definierte Position zu den Bedienungselementen des Fahrzeugs bei der Fahrt einhalten muß und so ohne Lageänderung schnell z. B. durch Muskelverspannung ermüdet, möglichst vermeiden.

Daher werden auch Systeme verwendet, die einstellbare Formänderungselemente beinhalten. Die Formänderungselemente erlauben durch Veränderung ihrer Gestalt z. B. die Sitzkontur an den Insassen anzupassen oder eine Massagefunktion einzustellen. Als Formänderungselemente sind z. B. Luftkissen zu verstehen, die mittels des Beaufschlagungsdrucks eingestellt werden können. Andere Technologien, wie Formgedächtnislegierungen, elektrische Stellmotoren usw. sind ebenfalls einsetzbar.

So offenbart die DE 100 63 478 A1 einen Sitz für Kraftfahrzeuge, der unter der Verwendung von mehreren Luftkissen die zeitliche Veränderung der Sitzkontur zur Massage erlaubt. Hierzu werden die Luftkissen zeitlich versetzt mit Druckluft beaufschlagt. Eine Schwingungsdämpfung bzw. Verminderung der Durchlässigkeit ist mit diesem System nicht möglich bzw. nicht vorgesehen. Zudem liegen die Luftkissen direkt unter dem Sitzbein, also in der Region, die bereits mit den höchsten Sitzdrücken beaufschlagt wird. Daher werden weitere Druckspitzen sofort als unangenehm empfunden. Zudem verwendet das Systeme lediglich zwei Luftkissen unterhalb des Sitzkissens bzw. der Sitzfläche, sodaß nur eine Pendelbewegung erzeugt werden kann, die lediglich eine Beckenkippung von links nach rechts erlaubt. Eine solche Beckenkippung ist jedoch aus anatomischen Gesichtspunkten unerwünscht.

Aus der US 6,203,105 B1 ist ein System bekannt, das ähnlich dem in der DE 100 63 478 A1 beschriebenen System einstellbare Luftkissen in der Sitzlehne und der Kopfstütze verwendet, um zusätzlich zur Konturverstellung und Massage im Falle eines Aufpralls des Fahrzeugs den Kontakt der Insassen mit den steifen Bestandteilen der Sitze zu verhindern. Hierzu ist das System mit einer Vielzahl von Sensoren ausgerüstet, welche einer entsprechenden Steuerung die gezielte Beaufschlagung der Luftkissen je nach Fahrsituation erlauben. Auch mit diesem System ist jedoch eine gezielte Schwingungsdämpfung bzw. Durchlässigkeitsverminderung, insbesondere der Sitzfläche nicht vorgesehen. Zudem ist auch eine aktive Vermeidung der Ermüdung des Fahrers mit dem System nicht möglich.

Es hat sich gezeigt, daß bereits die Verwendung von Luftkissen eine Verbesserung der Dämpfungseigenschaften des Sitzes bewirkt. Jedoch reicht dies allein und/oder das Vorsehen und die Anwendung von Massagefunktionen der Luftkissen allein zur Vermeidung der Ermüdung des Fahrers nicht aus.

Aufgabe der Erfindung ist es daher, einen Sitz bereitzustellen, der einer Ermüdung eines Fahrzeuginsassen, insbesondere des Fahrers, vorbeugt. Dies soll für möglichst viele Fahrsituationen und unterschiedliche Anatomien der Insassen möglich sein. Dabei soll der Sitzkomfort hoch sein.

Diese Aufgabe wird durch die in Anspruch 1 wiedergegebene Erfindung gelöst.

Indem mindestens zwei Formänderungselemente vorgesehen sind, wobei die Formänderungselemente so unter der Stützplatte verteilt sind, daß bei unterschiedlichen Veränderungen der Formänderungselemente die Sitzplatte in unterschiedliche Richtungen relativ zum Sitzrahmen kippt, wird von der Stützplatte eine kontrollierte Bewegung erzeugt, die sich auf die Sitzfläche überträgt. Diese kontrollierte Bewegung wird vom Insassen als angenehm empfunden, da er dies nicht als Nachgiebigkeit des Sitzes wahrnimmt, die aus den Fahrzeugbewegungen resultiert, sondern als kontrollierte Bewegung, die seinen Körper entlastet. Das subjektive Empfinden des unmittelbaren Kontaktes mit dem Fahrzeug selbst bleibt dabei erhalten.

Insbesondere vorteilhaft ist, daß die Köperbereiche des Insassen, insbesondere Oberschenkel und Gesäß, mit denen er die Sitzfläche berührt, unterschiedlichen Sitzdruck aufgrund der Bewegung der Stützplatte erfahren. Da die Bewegung von der steifen Sitzplatte erzeugt wird, überträgt sich die Bewegung sehr gleichmäßig auf das Sitzkissen. Damit wird ein wesentlicher Nachteil aus dem Stand der Technik, das örtliche Ausbeulen des Sitzkissens im Bereich eines Luftkissens, vermieden. Die Bewegung der Sitzfläche kann z. B. eine Taumelbewegung sein und entspricht damit annährend einem Räkeln im Sitz, was der Insasse von selbst durchführen würde, wenn er ermüdet.

Bei einer Ausführung sind zwei Formänderungselemente vorgesehen, wobei die Stützplatte gegenüber dem Sitzrahmen gelenkig gelagert ist. Damit kann bereits eine taumelnde Bewegung der Stützplatte erzeugt werden. Die gelenkige Lagerung kann ein Kugelgelenk sein, oder einfach ein punktförmiges Auflager auf dem die Stützplatte sich gegenüber dem Sitzrahmen abstützt, und was eine Taumelbewegung der Stützplatte gegenüber dem Sitzrahmen erlaubt. Auch bei mehr als zwei Formänderungselementen kann zusätzlich eine solche gelenkige Lagerung vorgesehen sein.

Vorteilhaft sind drei Formänderungselemente vorgesehen. Obwohl die Stützplatte so jede beliebige Taumelbewegung relativ zum Sitzrahmen ausführen kann, da die Lage der Stützplatte im Raum durch die Formänderungselemente festgelegt ist, hält sich der Fertigungsaufwand in Grenzen, da nur drei Formänderungselemente benötigt werden.

In einer vorteilhaften Ausführung sind vier Formänderungselemente vorgesehen sind. Damit wird die Stützplatte an vier auseinander liegenden Punkten unterstützt, wodurch die Stützkräfte in den einzelnen Formänderungselementen relativ gering sind. Dies ermöglicht eine sehr flexible Steuerung der Bewegung und reduziert den Bauaufwand der einzelnen Formänderungselemente, die gegenüber einer Auslegung mit zwei oder drei Formänderungselementen wesentlich weniger Stützkräfte aufbringen müssen. Insbesondere bei der Verwendung von Luftkissen als Formänderungselement ist vorteilhaft, daß der gesamte Bauraum unter der Stützplatte mit Luftkissen ausgefüllt werden kann. Dann sind nur relativ geringe Steuerdrücke notwendig, um die Bewegung der Stützplatte zu erzeugen.

Vorteilhaft ist die Stützplatte unter dem hinteren Bereich der Sitzfläche angeordnet ist. Wesentlich für die Verhinderung der Ermüdung des Fahrers ist, daß der Beckenbereich des Insassen von einer taumelnden Bewegung berührt wird. Von daher ist die Stützplatte vorteilhaft unter dem Gesäß des Insassen angeordnet. Dies schließt jedoch nicht aus, daß sich die Stützplatte auch nach vorne in den Bereich der Oberschenkel des Insassen erstreckt.

In einer weiteren vorteilhaften Ausführung ist die Stützplatte als dreidimensionale Schale ausgeformt. Damit erhöht sich der Sitzkomfort des Insassen. Entweder das Sitzkissen über der Stützschale kann dünner ausgeformt werden. Dann vermittelt der Sitz bei gleichen Komfort wie ein dickes Sitzkissen mit ebener Stützplatte einen unmittelbareren Kontakt zum Fahrzeug, z. B. durch verbesserten Seitenhalt. Oder das Sitzkissen kann dicker ausgeführt werden. Dann wird der Sitz als sehr komfortabel empfunden bei gleichzeitigem hohem Seitenhalt.

Vorteilhaft weist die Stützplatte Ausschnitte auf. Derartige Ausschnitte in Form von Löchern oder Randausschnitten können dort sein, wo Körperbereiche des Insassen druckempfindlich reagieren.

Besonders vorteilhaft weist die Stützplatte Ausschnitte oder Vertiefungen im Bereich des Schambeins auf. Im Bereich des Schambeins ist der Mensch besonders druckempfindlich. Durch die Ausschnitte bzw. Vertiefungen werden keine bzw. geringe Sitzkräfte auf das Schambein des Insassen übertragen. Dies führt zu einem erhöhten Komfortgefühl.

In einer weiteren Ausführung weist die Stützplatte eine ergonomisch an einen Sitzpassagier angepaßte Berandung auf. Damit unterstützt die Stützplatte den Insassen an den Körperpartien, die weniger druckempfindlich sind, und entlastet druckempfindliche Körperbereiche.

In einer Ausführungsform sind zwischen Formänderungselementen und Sitzrahmen bzw. Stützplatte und Formänderungselementen passive Dämpfungselemente angeordnet. Dies kann z.B. eine Schaumstofflage sein. Dadurch ist das Formänderungselement selber ein- oder beidseitig elastisch mit dem Sitzrahmen bzw. der Stützplatte verbunden. Vorteilhaft kann damit Dämpfungsverhalten des gesamten Sitzes optimiert werden.

In einer bevorzugten Ausführungsform sind die Formänderungselemente mit Druckluft beaufschlagbare Luftkissen. Der traditionelle Aufbau des Sitzes wird also um zwei Komponenten erweitert. Ein oder mehrere Luftkissen liegen auf der Blechpfanne (Sitzrahmen) und eine Stützplatte zwischen den Luftkissen und dem Schaumblock (Sitzkissen). Die Luftkissen wirken dabei als einstellbare Gasfedern zur zusätzlichen Dämpfung. Dabei kann zwischen Luftkissen und Sitzrahmen bzw. Stützplatte und Luftkissen weitere Dämpfungselemente vorgesehen sein, vorzugsweise ein Schaumblock.

Dazu kann die Stützplatte an die Unterseite des Schaumblocks geklebt werden. Die Lagerung der Stützplatte durch den Schaumblock ist dabei in vertikaler Richtung nachgiebig und in horizontaler Richtung fester, da der Schaumblock (Sitzkissen bzw. Sitzkissen) als dicke, aber biegeweiche Membran wirkt. Die Stützplatte verteilt den Druck der Luftkissen, so daß diese nicht mehr punktuell in der Sitzfläche als Druckspitzen wahrgenommen werden. Zudem wirkt Stützplatte als Tilgungsmasse, die je nach Ausführung eine Variation oder Einstellung der dämpfenden Eigenschaften erlaubt. Somit wird der Einstellungsbereich durch die Stützplatte erweitert. Vorteilhafterweise ist die Stützplatte unter dem hinteren Bereich der Sitzfläche angeordnet.

Stützplatte und Luftkissen können auch im Schaumblock eingelegt oder eingeschäumt sein. Dabei müssen die Luftkissen nicht direkt im Kontakt mit der Stützplatte bzw. dem Sitzrahmen stehen, sondern ein Teil des Schaumstoffes des Schaumblockes kann zwischen Sitzplatte und Luftkissen bzw. Sitzrahmen und Luftkissen angeordnet sein.

Wenn der Sitzrahmen die Aufwärtsbewegung der Sitzkissen z. B. des Kissens begrenzt, werden weitere Einstellungsmöglichkeiten der Dämpfung eröffnet, da die Luftkissen die Sitzkissen bzw. das Kissen der Sitzfläche komprimieren, wodurch dessen Dämpfung und Federrate sich verändert.

In einer weiteren Ausführungsform der Erfindung sind die Formänderungselemente über eine Steuerung regelbar, so daß die Dämpfungseigenschaften während der Fahrt der Fahrsituation und/oder dem Insassen angepaßt werden können. Dies kann manuell oder bevorzugt automatisch erfolgen.

Sinnvoll ist es, wenn die Steuereinrichtung physiologische Parameter (Größe, Gewicht, Alter, Geschlecht etc.) und/oder Fahrzeugparameter (Massen Steifigkeiten, Radaufhängung, etc) und/oder Fahrsituationsparameter (Unebenheiten, Geschwindigkeit etc.) und/oder Sitzparameter (z. B. Polsterung, Sitzrahmen), die ggf. über Sensoren erfaßt werden, zur Steuerung der Formänderungselemente berücksichtigt.

Denkbar ist es weiterhin, daß die Steuerung eine Speichereinrichtung umfaßt. D. h. eine Personalisierung mit einer Sitz-Memory-Einstellung in Verbindung mit Sensoren, die aktuelle Parameter aufzeichnen und auswerten, wird möglich. Die Sensoren können z. B. Beschleunigungen, Dämpfereinstellungen, Geschwindigkeit, Lenkwinkel und Gierrate etc. bestimmen. Die Luftkissensteuerung kann dabei Signale aus dem Bus der Fahrzeugelektronik z. B. CAN-Bus abgreifen, mit der "Fahrwerksoftware" verbunden und so in die Fahrzeugelektronik integriert werden.

Ferner erlaubt die Erfindung aktiv die Verhinderung oder zumindest die Verzögerung der Ermüdung der Insassen bzw. des Fahrers.

Es ist im Sitzrahmen der Erfindung erstmalig unter Zugrundelegung eines physiologischen Konzepts festgestellt worden, daß durch genau definierte Bewegungen der Stützplatte eine leichte Bewegung des Beckens provoziert wird und damit eine Umstellung der Muskelaktivierung erwirkt wird, was der Ermüdung vorbeugt.

Der menschliche Bewegungsapparat verfügt über wesentlich mehr Muskeln, als zur eigentlichen Bewegung erforderlich sind, die aber zur Ermüdung beitragen. Bei gleichen Randbedingungen einer Bewegung gibt es daher viele mögliche Aktivierungsmuster der Muskeln. Diese Redundanz ermöglicht eine Muskelaktivierung durch Bewegungen der Stützplatte die physiologischen Optimierungskriterien genügt, einzustellen. Kleine Lageänderungen führen so ohne weiteres zu einer deutlich anderen Aktivierung und entlasten somit bestimmte Muskeln, während andere Muskeln angespannt werden. Diese zyklische Ent/Anspannung beugt einer Ermüdung vor, weil langfristige konstante Anspannung, die ein wesentlicher Ermüdungsfaktor ist, verhindert wird. Die zyklische Bewegung des Beckens infolge der Lageänderung der Stützplatte und der damit einhergehenden sich ändernde Muskelaktivierung ist nachweisbar und wurde mit einem Haltungsmonitor (Meßgerät zur Aufzeichnung der Wirbelsäulenbewegung und Muskelaktivierung) gemessen.

Die Erfindung verhilft dem Fahrer zum aktiven Sitzen, ohne von der Fahraufgabe abzulenken. Hierzu wird eine Vielzahl von Bewegungsmustern mit aktiver Unterstützung und Bewegungen die ein verändertes Muskelaktivierungsschema provozieren erzeugt, wobei die Bewegungen klein genug gehalten werden, um beim Fahren nicht zu stören und keine zusätzliche Belastung darzustellen.

Dies wird erfindungsgemäß durch aktive Unterstützung, wohldosierten Hüben, einer ausreichenden Zahl von Freiheitsgraden und einer anatomisch geschickten Anordnung erreicht.

Die relative Lage der Stützplatte zum Sitzrahmen (Blechpfanne) ist vorzugsweise dazu in drei Freiheitsgraden veränderlich: Vertikale Position und Drehung um die zur Sitzfläche parallelen Achsen. Die Lage der Stützplatte und somit der Sitzfläche wird also durch die Steuerung der Luftkissen gezielt beeinflußt. Ferner sind zyklische Lageänderungen einstellbar.

Somit kann eine Beckenkippung in Richtung von vorne nach hinten und umgekehrt erzeugt werden, die entlastend ist und bei Wirbelsäulengymnastik bevorzugt verwendet wird. Zur Vermeidung von Rückenschmerzen kommt es gerade auf diese besondere Beckenkippung an.

Der Hub der einzelnen Formänderungselemente bzw. Luftkissen liegt in der Größenordnung von 5 mm bis 30 mm. Die Ansteuerung kann über Magnetventile erfolgen, die von der Steuerung eingestellt werden. Über geeignete Software ist es möglich, geeignete Druckverläufe zu programmieren, vorzugeben und manuell oder automatisch auszuwählen.

Ein vorteilhafter Steuerungszyklus der Luftkissen umfaßt einem U-förmigen Verlauf, wobei die Druckwelle z. B. von vorne nach hinten und links nach rechts verläuft, also etwa von VL nach HL nach HR nach VR nach HR nach HL nach VL (V=vorne, H=hinten, R=rechts, L=links). Geeignete Zyklusdauern betragen ca. 1 min.

In einer weiteren Ausführung ändert sich die Lage der Stützplatte abhängig von den auf das Fahrzeug wirkenden Quer- und/oder Längsbeschleunigungen. Eine solche Steuerung der Stützplatte kann dazu dienen, zusätzlichen Seitenhalt oder Längshalt aufzubauen, indem die Stützplatte entgegengesetzt der wirkenden Beschleunigungskräfte kippt. Dann erfährt der Fahrer bzw. Insasse eine Stützwirkung des Sitzes insofern, als das er das Gefühl hat, der Sitz legt sich mit ihm in die Kurve bzw. unterstützt ihm beim Bremsen oder Beschleunigen.

Formänderungselemente im Sinne dieser Erfindung können neben den beschriebenen Luftkissen alle geeigneten Aktuatoren sein, die die beschriebene Bewegung in der Stützplatte erzeugen können. Beispielsweise wären dies auch hydraulische Aktuatoren oder elektrische betriebene Stellmotoren.

Weitere Merkmale, Einzelheiten und Vorteile der Erfindung ergeben sich aus den Unteransprüchen und der Zeichnung. Es zeigen schematisch:
- Fig. 1: eine perspektivische, transparente Ansicht eines erfindungsgemäßen Sitzes;
- Fig. 2: einen Querschnitt durch den Sitz aus Fig. 1;

- Fig. 3: eine perspektivische, transparente Ansicht einer weiteren Ausführungsform eines erfindungsgemäßen Sitzes und
- Fig. 4: einen perspektivische Ansicht der Stützplatte des Sitzes aus Fig. 3;
- Fig. 5: einen Längsschnitt durch den Sitz und die Lehne des Fahrzeugsitzes aus Fig. 3; und
- Fig. 6: einen Längsschnitt durch das Sitzkissen einer weiteren Ausführung eines erfindungsgemäßen Sitzes.

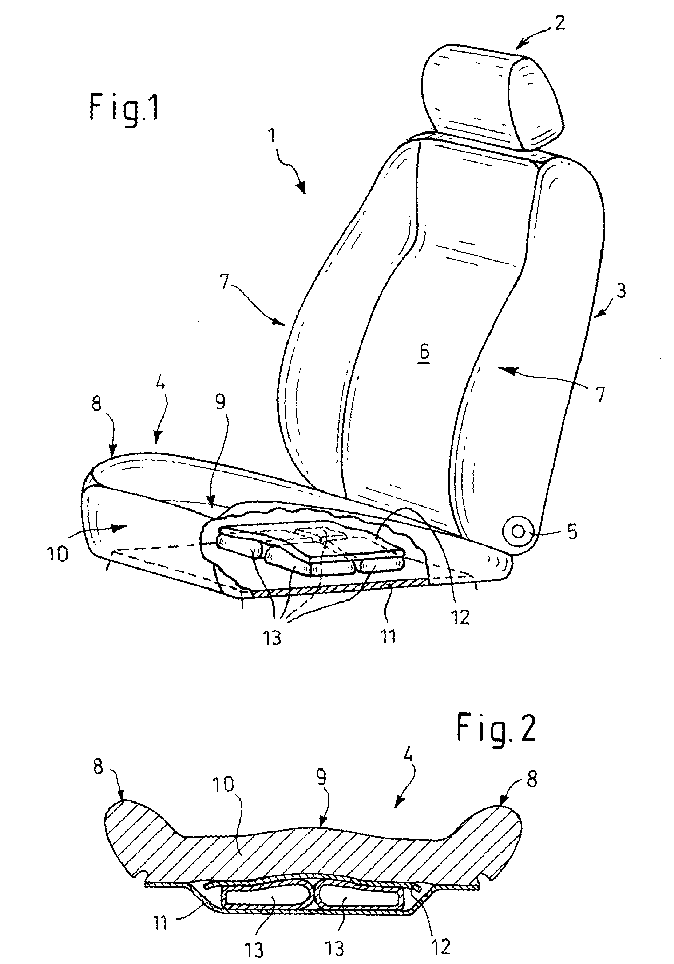

Fig. 1 zeigt schematisch einen Fahrzeugsitz 1 in einer schrägen Perspektive, wobei die Transparenz einen Blick ins Innere des Sitzes ermöglicht. Fig. 2 zeigt einen Querschnitt durch den Sitz aus Fig. 1. Die Numerierung aus Figur 1 und 2 wird für gleiche Komponenten des Sitzes auch in den folgenden Figuren verwendet.

Der gesamte Fahrzeugsitz 1 umfaßt eine Kopfstütze 2, die oben an einer Rückenlehne 3 angesetzt ist, die wiederum über ein verstellbares Scharnier 5 mit dem eigentlichen Sitz 4 gekoppelt ist. Der eigentliche erfinderische Sitz 4 wird dabei von einem Sitzrahmen 11 aus Stahlblech getragen, der unter der Sitzfläche 9 angeordnet und mit dem Fahrzeug verbunden ist.

Die Rückenlehne 3 weist eine im Längsschnitt etwa S-förmige, anatomisch geformte Sitzkissen 6 für den Rücken des Insassen auf, die an den Seiten mit vorstehenden Rippen 7 begrenzt ist, die dem Insassen seitlich Halt geben.

Der Sitz 4 weist ein Sitzkissen 10 auf, das die eigentliche Sitzfläche 9 definiert. Auch hier sind an den Seiten vorstehenden Rippen 8 vorgesehen, die dem Insassen, insbesondere in Kurven seitlich Halt geben.

Das Sitzkissen 10 wird von einem Schaumblock, bestehend aus einem geeigneten Natur- und/oder Kunststoff gebildet, der ggf. mit einem geeigneten Material wie Leder bezogen ist. Das Sitzkissen 10 muß die üblichen bekannten Eigenschaften, wie Federung, Dämpfung, Feuchtigkeitstransport usw. aufweisen. Ferner ist es möglich Heiz- und/oder Kühlvorrichtungen im Sitzkissen 10 vorzusehen.

Unterhalb des Sitzkissens 10 ist eine anatomisch geformte Stützplatte 12 aus steifem Material vorgesehen, wie aus Fig. 2 zu entnehmen ist. Die Stützplatte 12 ist dabei unter dem hinteren Bereich der Sitzfläche 9 angeordnet, wo üblicherweise das Gesäß des Insassen aufliegt. Zwischen Stützplatte 12 und dem Sitzrahmen 11 befinden sich vier Luftkissen 13. Die Luftkissen 13 sind dabei derart angeordnet, daß sie unter den Ecken der etwa rechteckigen Stützplatte 12 liegen.

Die vier voneinander unabhängig steuerbaren und beaufschlagbaren Luftkissen 13 unter der Stützplatte 12 ermöglichen neben der vertikalen Positionierung ein Kippen der Stützplatte 12 um zwei parallel zur Ebene der Sitzfläche und senkrecht zueinander verlaufenden Achsen. Somit kann eine Beckenkippung in Richtung von vorne nach hinten und umgekehrt erzeugt werden, die entlastend ist und z. B. bei Wirbelsäulengymnastik bevorzugt verwendet wird. Zur Vermeidung von Rückenschmerzen kommt es gerade auf diese Beckenkippung an. Diese Bewegung kann mit einer Kippbewegung von links nach rechts gekoppelt werden, so daß eine besonders gute Vermeidung der Ermüdung durch das durch die Beckenbewegung bedingte abwechselnde zyklische An- und Entspannen der Muskulatur erreicht wird.

Die Luftkissen 13 sind mittels einer nicht dargestellte Steuerung, Ventile und Kompressor mittels des beaufschlagten Luftdrucks aufblasbar. Die Steuerung kann nach Auswertung von Sensoren stammenden Daten über die Fahrsituation und den Insassen den Luftdruck im Luftkissen 13 automatisch regeln. Auch eine manuelle Regelung, Vorgabe oder ein Eingriff in die automatische Regelung ist denkbar. Über entsprechende Software ist es möglich, geeignete Druckverläufe zu programmieren, vorzugeben und manuell oder automatisch auszuwählen.

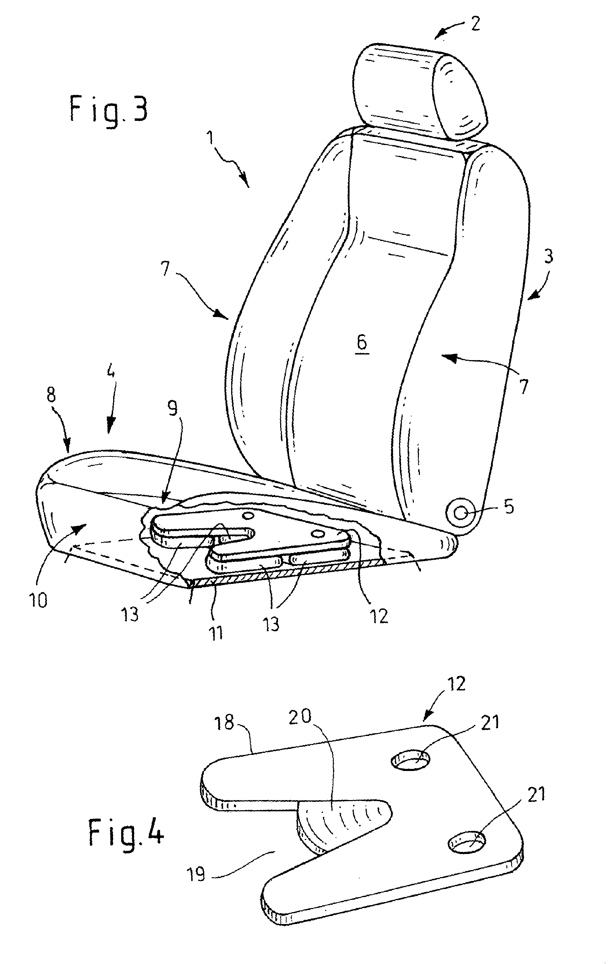

Fig. 3 zeigt eine weitere erfindgemäße Ausführung des Sitzes 4 mit einer anatomisch geformten Stützplatte 12, die an die Körperform eines Insassen angepaßt ist, wobei Fig. 4 die perspektivische Ansicht der Stützplatte 12 zeigt.

Die Berandung 18 der Stützplatte 12 weist im Bereich zwischen den Schenkeln des Insassen einen Auschnitt 19 auf, da dort kein Sitzkontakt herrscht. Im Bereich des Schambeins weist die Stützplatte 12 eine Eindrückung 20 auf, um den Druck auf diesen empfindlichen Körperbereich zu entlasten. Im Bereich 21 der Sitzbeinhöcker ist die Stützplatte gelocht, um dort den Insassen zu entlasten.

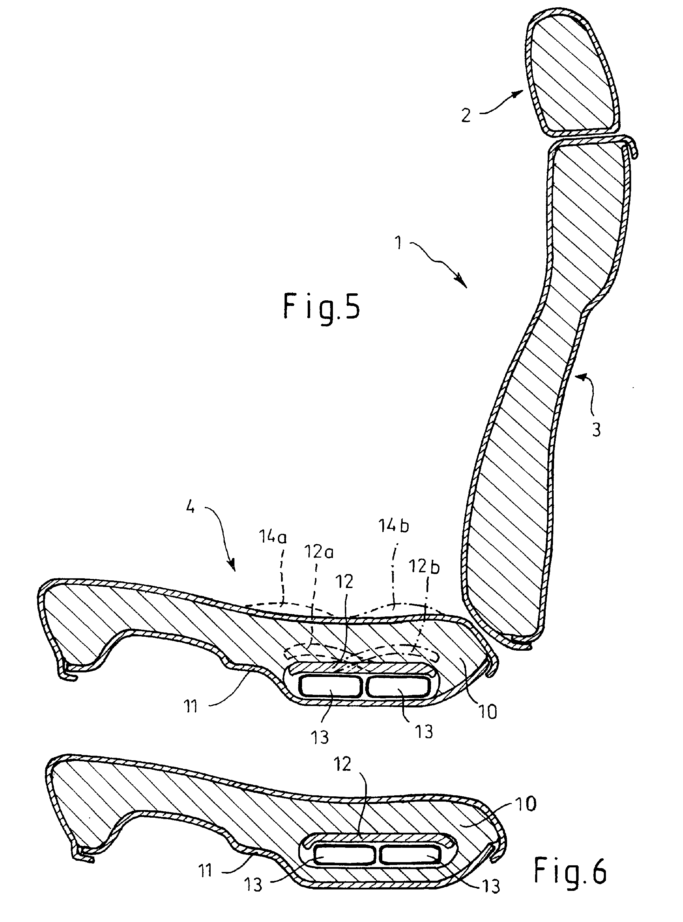

Fig. 5 zeigt die von vorne nach hinten gerichtete Kippbewegung der Stützplatte 12, 12a durch unterschiedliche Beaufschlagung der entsprechenden Luftkissen 13, wodurch eine Neigung der Stützplatte 12 und damit entsprechend auch eine Neigung der Sitzfläche 9 erzielt wird. Dabei kann die Neigung nach vorne, nach hinten, oder seitwärts - hier nicht dargestellt - erfolgen, und bevorzugt, abwechselnd zyklisch in alle Richtungen, so daß z. B. eine taumelnde Bewegung der Stützplatte 12 resultiert.

Fig. 6 zeigt eine Ausführung, bei der die Luftkissen 13 und die Stützplatte 12 vollständig in den Schaumblock des Sitzkissens 10 eingeschäumt sind. Dann ergibt sich für das Dämpfungsverhalten des Sitzes vorteilhaft eine Dreifachkopplung, da das Schaummaterial ober- und unterhalb der Luftkissen 13 sowie die Luftkissen 13 jeweils physikalisch gesehen jeweils eigene Federn darstellen.

Besonders geeignet ist die Erfindung für die Sitzfläche von Kraftfahrzeugsitzen. Es ist jedoch auch möglich, entsprechende Konstruktionen in der Rückenlehne vorzusehen.

## Patentansprüche

1. Sitz, insbesondere Fahrzeugsitz, mit einem Sitzrahmen (11), einem Sitzkissen (10) und einem Formänderungselement (13) zwischen Sitzrahmen (11) und Sitzkissen (10), wobei zwischen Formänderungselement (13) und Sitzkissen (10) zusätzlich eine steife Stützplatte (12) angeordnet ist,
**dadurch gekennzeichnet, daß**
mindestens zwei Formänderungselemente (13) vorgesehen sind, wobei die Formänderungselemente (13) so unter der Stützplatte verteilt sind, daß bei unterschiedlichen Veränderungen der Formänderungselemente (13) die Sitzplatte (13) in unterschiedliche Richtungen relativ zum Sitzrahmen (11) kippt.

2. Sitz nach Anspruch 1,
**dadurch gekennzeichnet, daß**
zwei Formänderungselemente (13) vorgesehen sind und die Stützplatte (12) gegenüber dem Sitzrahmen (11) gelenkig gelagert ist.

3. Sitz nach Anspruch 1 oder 2,
**dadurch gekennzeichnet, daß**
drei Formänderungselemente (13) vorgesehen sind.

4. Sitz nach einem der vorherigen Ansrpüche,
**dadurch gekennzeichnet, daß**
vier Formänderungselemente (13) vorgesehen sind.

5. Sitz nach einem der vorhergehenden Ansprüche,
**dadurch gekennzeichnet, daß**
die Stützplatte (12) unter dem hinteren Bereich der Sitzfläche (9) angeordnet ist.

6. Sitz nach einem der vorhergehenden Ansprüche,
**dadurch gekennzeichnet, daß**
die Stützplatte (12) als dreidimensionale Schale ausgeformt ist.

7. Sitz nach einem der vorhergehenden Ansprüche,
**dadurch gekennzeichnet, daß**
die Stützplatte (12) Ausschnitte (19, 21) aufweist.

8. Sitz nach einem der vorhergehenden Ansprüche,
**dadurch gekennzeichnet, daß**
die Stützplatte (12) Ausschnitte oder Vertiefungen (20) im Bereich des Schambeins aufweist.

9. nach einem der vorhergehenden Ansprüche,
**dadurch gekennzeichnet, daß**
die Stützplatte (12) eine ergonomisch an einen Sitzpassagier angepaßte Berandung (18) aufweist.

10. Sitz nach einem der vorhergehenden Ansprüche,
**dadurch gekennzeichnet, daß**
zwischen dem Formänderungselement (13) und Sitzrahmen (11) und / oder Stützplatte (12) und Formänderungselement (13) passive Dämpfungselemente angeordnet sind.

11. Sitz nach einem der vorhergehenden Ansprüche,
**dadurch gekennzeichnet, daß**
die Formänderungselemente mit Druckluft beaufschlagbare Luftkissen (13) sind.

12. Sitz nach einem der vorhergehenden Ansprüche,
**dadurch gekennzeichnet, daß**
die Formänderungselemente (13) über eine Steuerung, insbesondere automatisch regelbar sind.

13. Sitz nach Anspruch 12,
**dadurch gekennzeichnet, daß**
die Steuereinrichtung physiologische Parameter und/oder Fahrzeugparameter und/oder Fahrsituationsparameter und/oder Sitzparameter über Sensoren zur Steuerung der Formänderungselemente (13) berücksichtigt.

14. Sitz nach Anspruch 12 oder 13,
**dadurch gekennzeichnet, daß**
sich die Lage der Stützplatte (12) zyklisch ändert.

15. Sitz nach einem der Ansprüche 12 bis 14,
**dadurch gekennzeichnet, daß**
die Lage der Stützplatte (12) sich abhängig von auf das Fahrzeug wirkenden Quer- und/oder Längsbeschleunigungen ändert.

## Claims

1. Seat, in particular vehicle seat, having a seat frame (11), a seat cushion (10) and a shape change element (13) between the seat frame (11) and the seat cushion (10), a rigid support plate (12) being arranged additionally between the shape change element (13) and the seat cushion (10), **characterized in that** at least two shape change elements (13) are provided, the shape change elements (13) being distributed under the support plate in such a way that, in the event of different changes of the shape change elements (13), the seat plate (13) tilts in different directions relative to the seat frame (11).

2. Seat according to Claim 1, **characterized in that** two shape change elements (13) are provided and the support plate (12) is mounted in an articulated manner with respect to the seat frame (11).

3. Seat according to Claim 1 or 2, **characterized in that** three shape change elements (13) are provided.

4. Seat according to one of the preceding Claims, **characterized in that** four shape change elements (13) are provided.

5. Seat according to one of the preceding Claims, **characterized in that** the support plate (12) is arranged under the rear region of the seat surface (9).

6. Seat according to one of the preceding Claims, **characterized in that** the support plate (12) is formed as a three-dimensional shell.

7. Seat according to one of the preceding Claims, **characterized in that** the support plate (12) has cutouts (19, 21).

8. Seat according to one of the preceding Claims, **characterized in that** the support plate (12) has cutouts or depressions (20) in the region of the pubic bone.

9. Seat according to one of the preceding Claims, **characterized in that** the support plate (12) has an edge (18) which is adapted ergonomically to a seat passenger.

10. Seat according to one of the preceding Claims, **characterized in that** passive damping elements are arranged between the shape change element (13) and the seat frame (11) and/or the support plate (12) and the shape change element (13).

11. Seat according to one of the preceding Claims, **characterized in that** the shape change elements are air cushions (13) which can be loaded with compressed air.

12. Seat according to one of the preceding Claims, **characterized in that** the shape change elements (13) can be regulated via a controller, in particular automatically.

13. Seat according to Claim 12, **characterized in that** the control device takes into consideration physiological parameters and/or vehicle parameters and/or driving situation parameters and/or seat parameters via sensors in order to control the shape change elements (13).

14. Seat according to Claim 12 or 13, **characterized in that** the position of the support plate (12) changes cyclically.

15. Seat according to one of Claims 12 to 14, **characterized in that** the position of the support plate longitudinal accelerations which act on the vehicle.

## Revendications

1. Siège, en particulier siège de véhicule, comprenant un cadre de siège (11), un coussin de siège (10) et un élément de modification de forme (13) entre le cadre de siège (11) et le coussin de siège (10), une plaque de support rigide (12) étant en outre disposée entre l'élément de modification de forme (13) et le coussin de siège (10),
**caractérisé en ce que**
l'on prévoit au moins deux éléments de modification de forme (13), les éléments de modification de forme (13) étant répartis sous la plaque de support de telle sorte que pour des variations différentes des éléments de modification de forme (13), la plaque de siège (13) bascule dans des directions différentes par rapport au cadre de siège (11).

2. Siège selon la revendication 1,
**caractérisé en ce que**
l'on prévoit deux éléments de modification de forme (13) et la plaque de support (12) est montée de manière articulée par rapport au cadre de siège (11).

3. Siège selon la revendication 1 ou 2,
**caractérisé en ce que**
l'on prévoit trois éléments de modification de forme (13).

4. Siège selon l'une quelconque des revendications précédentes,
**caractérisé en ce que**
l'on prévoit quatre éléments de modification de forme (13).

5. Siège selon l'une quelconque des revendications précédentes,
**caractérisé en ce que**
la plaque de support (12) est disposée sous la région arrière de la surface de siège (9).

6. Siège selon l'une quelconque des revendications précédentes,
**caractérisé en ce que**
la plaque de support (12) est réalisée sous la forme d'une coque tridimensionnelle.

7. Siège selon l'une quelconque des revendications précédentes,
**caractérisé en ce que**
la plaque de support (12) présente des découpures (19, 21).

8. Siège selon l'une quelconque des revendications précédentes,
**caractérisé en ce que**
la plaque de support (12) présente des découpures ou des renfoncements (20) dans la région du pubis.

9. Siège selon l'une quelconque des revendications précédentes,
**caractérisé en ce que**
la plaque de support (12) présente un bord (18) adapté de manière ergonomique à un passager du siège.

10. Siège selon l'une quelconque des revendications précédentes,
**caractérisé en ce que**
l'on dispose entre l'élément de modification de forme (13) et le cadre de siège (11) et/ou entre la plaque de support (12) et l'élément de modification de forme (13) des éléments d'amortissement passifs.

11. Siège selon l'une quelconque des revendications précédentes,
**caractérisé en ce que**
les éléments de modification de forme sont des coussins d'air (13) pouvant être sollicités par de l'air sous pression.

12. Siège selon l'une quelconque des revendications précédentes,
**caractérisé en ce que**
les éléments de modification de forme (13) peuvent être réglés par une commande, en particulier automatiquement.

13. Siège selon la revendication 12,
**caractérisé en ce que**
le dispositif de commande tient compte de paramètres physiologiques et/ou de paramètres du véhicule et/ou de paramètres de situation de conduite et/ou de paramètres de siège par le biais de capteurs pour la commande des éléments de modification de forme (13).

14. Siège selon la revendication 12 ou 13,
**caractérisé en ce que**
la position de la plaque de support (12) varie cycliquement.

15. Siège selon l'une quelconque des revendications 12 à 14,
**caractérisé en ce que**
la position de la plaque de support (12) varie en fonction d'accélérations transversales et/ou longitudinales s'exerçant sur le véhicule.
